# EUROPÄISCHE PATENTSCHRIFT

(11) **EP 2 354 047 B1**
(45) Veröffentlichungstag und Bekanntmachung des Hinweises auf die Patenterteilung: **20.06.2012**
(21) Anmeldenummer: 10000944.8
(22) Anmeldetag: 29.01.2010
(51) Int. Cl.: B65G 1/137

(54) **Verfahren zum Zusammenstellen und Verpacken von Waren für den Versand**
Method for collecting and packaging goods for dispatch
Procédé de rassemblement et d'emballage de marchandises à envoyer

(43) Veröffentlichungstag der Anmeldung: 10.08.2011
(73) Patentinhaber: Pierau Unternehmensberatung GmbH, 22391 Hamburg (DE)
(72) Erfinder: Spitzki, Andreas, 88339 Bad Waldsee (DE)
(74) Vertreter: Glawe, Delfs, Moll

(56) Entgegenhaltungen:
- EP-A1- 0 007 742
- JP-A- 2003 206 009

## Beschreibung

Die Erfindung betrifft ein Verfahren zum Zusammenstellen und Verpacken von Waren für den Versand, bei dem Waren für mehrere Aufträge aus einem Lager entnommen und unsortiert in eine Transporteinheit eingebracht (kommissioniert) werden, die eingebrachten Waren mit der Transporteinheit zu einer Sortierstation verbracht werden, wo sie nach Aufträgen sortiert werden, und bei dem sie in Kartons, die aufgerichtet zugeführt werden, verpackt abtransportiert werden.

In Versandhäusern ist eine sehr große Zahl von unterschiedlichen Artikeln gelagert, die entsprechend unterschiedlichen Aufträgen an unterschiedliche Kunden versandt werden sollen. Dabei tritt das Problem auf, Tausende von Artikeln den einzelnen Aufträgen zuzuordnen und gemeinsam zu versenden.

Bei einem Verfahren der eingangsgenannten Art werden die Waren zunächst einem Lager entnommen und für mehrere Aufträge gesammelt und unsortiert in eine Transporteinheit eingebracht (kommissioniert). Diese Transporteinheit kann ein Rollcontainer, eine Palette, ein Behälter oder ähnliches sein. Die eingebrachten Waren werden dann mit der Transporteinheit zu einer Sortierstation verbracht, wo die Waren nach Aufträgen sortiert werden. Nach Beendigung der Sortierung werden die Waren dann in Kartons, die aufgerichtet oder aufgefaltet zugeführt werden, verpackt abtransportiert.

Wegen der sehr großen Zahl von abzuwickelnden Aufträgen ist es wesentlich, mit möglichst geringem Arbeitsaufwand sehr schnell und ohne große Fehlerquoten die Sortierung durchzuführen. Die Aufgabe der Erfindung besteht in der Schaffung eines Verfahrens der eingangsgenannten Art, bei dem die Sortierung auf besonders vorteilhafte, übersichtliche und zuverlässige Art und Weise durchgeführt werden kann.

Die erfindungsgemäße Lösung besteht darin, dass die Waren in der Sortierstation nach Aufträgen sortiert in Fächer von entlang einem geschlossenen Schienenstrang verfahrbaren Sammeleinheiten eingebracht werden, die nach Beendigung der Befüllung an eine Stelle verschoben werden, wo die Waren entnommen werden und in den Kartons verpackt abtransportiert werden.

Erfindungsgemäß werden die Waren also in der Sortierstation nach Aufträgen sortiert in Fächern von entlang einem geschlossenen Schienenstrang verfahrbaren Sammeleinheiten eingebracht. Dabei sind vorteilhafterweise mehrere solcher Sammeleinheiten nebeneinander angeordnet und für die Sortierperson zugänglich, so dass gleichzeitig in die entsprechende Anzahl von Fächern, die der Zahl der Aufträge entspricht, einsortiert werden kann. Diese Sammeleinheiten werden dann, wenn die Befüllung beendet ist, an eine andere Stelle verfahren, wobei leere zu befüllende Sammeleinheiten wieder an die Stelle verschoben werden, wo dann weitere Sortiervorgänge vorgenommen werden können. Dadurch kann die Sortierung eines neuen Batches unmittelbar fortgeführt werden. Die befüllten Sammeleinheiten werden an eine Stelle verschoben, wo die Waren entnommen werden und in den Kartons verpackt abtransportiert werden.

Als besonders vorteilhaft hat es sich erwiesen, wenn als Sammeleinheiten an den Schienen aufgehängte und entlang derselben verschiebbare, die Fächer aufweisende Vorrichtungen verwendet werden, die auch als Gondeln bezeichnet werden. Die Gondeln, in die die Waren einsortiert worden sind, werden zusammenhängend als ein Zug aus der Sortierstation herausbewegt. Dann wird die Sortierstation unmittelbar anschließend wieder mit einem Zug von Gondeln - mit leeren Fächern bzw. leeren Kartons - bestückt. Die Anzahl der Gondeln in der Sortierstation ist immer dieselbe. Es werden also mit dem Zug von Gondeln die Waren für eine größere Anzahl von Aufträgen gleichzeitig aus dem Sortierbereich zu dem Bereich verschoben, wo sie entnommen werden.

Bei einer vorteilhaften Ausführungsform werden die Waren in der Sortierstation in Kartons eingebracht, die vorher leer in die Fächer der Sammeleinheiten eingestellt worden sind. Nach Verschieben der Gondeln an die Stelle, wo die Kartons entnommen werden können, können diese dann auf eine Fördereinrichtung gestellt werden, mit der sie zu einer Versandstation befördert werden können.

Zweckmäßigerweise werden dabei an der Stelle des geschlossenen Schienenstrangs, an der die gefüllten Kartons entnommen und auf eine Fördereinrichtung gestellt werden, leere Kartons von einer Fördereinrichtung entnommen und in die Fächer der Sammeleinheiten eingestellt. Diese Sammeleinheiten werden dann, wenn Plätze an der Stelle frei geworden sind, wo einsortiert wird, dorthin verschoben.

Bei einer anderen vorteilhaften Ausführungsform werden die Waren lose in die Fächer der Sammeleinrichtungen eingelegt. An einer Stelle des Schienenstrangs, wo leere Kartons mit einer Fördereinrichtung zugeführt und gefüllte Kartons mit einer Fördereinrichtung abgeführt werden, werden sie aus den Fächern entnommen und in zugeführte Kartons eingelegt.

Bei dieser Ausführungsform kann vorgesehen sein, dass eine oder mehrere Personen die leeren Kartons von der Fördereinrichtung entnehmen und die gefüllten Kartons auf die Fördereinrichtung stellen und andere Personen die Waren aus den Fächern entnehmen und in die Kartons einfüllen. Andererseits ist es auch in vielen Fällen zweckmäßig, dass eine oder mehrere Personen die leeren Kartons von der Fördereinrichtung entnehmen und die gefüllten Kartons auf die Fördereinrichtung stellen und dieselben Personen die Waren aus den Fächern entnehmen und in die Kartons einfüllen. Bei dieser Ausführungsform und in anderen Fällen ist es vorteilhaft, wenn Pufferspeicher für leere Kartons verwendet werden.

Für das Zuführen der leeren und das Abführen der gefüllten Kartons können getrennte Fördereinrichtungen verwendet werden.

Bei einer anderen Ausführungsform wird zweckmäßigerweise dieselbe Fördereinrichtung zum Zuführen der leeren und Abführen der gefüllten Kartons verwendet. Diese wird zweckmäßigerweise breiter ausgebildet, als wenn zwei getrennte Fördereinrichtungen vorgesehen sind. Um die Geschwindigkeit der Fördereinrichtung reduzieren zu können, können dabei gefüllte und leere Kartons ineinander gestapelt werden.

Zweckmäßigerweise hat der Schienenstrang die Form eines "doppelwandigen" U. Damit ist gemeint, dass der-Schienenstrang sich von der Außenseite des Stegs des "U" außen um einen Schenkel des U erstreckt, dann an der Innenseite des Schenkels zur Innenseite des anderen Schenkels verläuft und dann an der Außenseite dieses zweiten Schenkels wieder zur Außenseite des Stegs verläuft. Das Einsortieren kann dann an dem Teil des Schienenstrangs durchgeführt werden, der sich an der Innenseite des U befindet. Die Sortierung kann dann gleichzeitig nach drei-Seiten erfolgen, so dass eine entsprechend große Anzahl von Fächern in Reichweite der sortierenden Person ist.

Dank elektronischer Steuerung der gesamten Auftragsabwicklung kann das Verfahren so gesteuert werden, dass Kartons unterschiedlicher Größe entsprechend der Menge/Größe der Waren der einzelnen Aufträge zugeführt werden. Es kann also so immer sichergestellt werden, dass für jeden Auftrag genau der richtige Karton zum Einpacken der Waren griffbereit ist.

Andererseits kann aber auch vorgesehen werden, dass Kartons ohne Vorbestimmung der Größen zugeführt werden und, falls erforderlich, die Waren anschließend in größere oder kleinere Kartons umgepackt werden. In vielen Fällen wird nämlich eine große Zahl von Aufträgen immer die gleiche Größe der Kartons verlangen.

Zweckmäßigerweise werden optische und/oder akustische Signale für die Auswahl der Kartons und/oder das Einsortieren in die Fächer der Sammeleinheiten verwendet.

Die Sortierinformationen, nach denen die Sortierperson die Sortierung der Teile auf den Auftrag bzw. in das entsprechende Fach vornimmt, können unterschiedlich übermittelt werden. Insbesondere gibt es folgende Möglichkeiten:
a. Etiketten (jedes Warenstück wurde zuvor in der Kommissionierung mit einem Etikett gekennzeichnet. Auf diesem Etikett steht der Hinweis in welches Fach das Teil zu legen ist).
b. Put-by-voice (der Bediener scannt das Warenstück ein und erhält über ein Head-set die Fachinformation, wohin das Warenstück zu legen ist).
c. Put-to-light (der Bediener scannt das Warenstück ein. Jedes Fach ist mit einer Anzeige ausgestattet. Durch das Einscannen des Teils wird dem Bediener signalisiert, wohin das Teil einzulegen ist. Hierbei kann die Fachanzeige entweder fest verbunden werden mit jedem Fach einer Gondel oder die Fachanzeige wird an einem Gestell befestigt. In diesem Fall kann die Fachanzeige für mehrere Gondeln genutzt werden. Dadurch, dass die Gondel nach der Sortierung aus dem Sortierbereich weitergeschoben wird, steht dieser Bereich dann für die Neuaufnahme einer weiteren Gondel eines anderen Batch zur Verfügung).
d. Put-by-point (der Bediener scannt das Warenstück ein und erhält über einen Lichtstrahl die Fachinformation, wohin das Warenstück zu legen ist).
e. Put-by-terminal (der Bediener scannt das Warenstück ein und erhält über ein Terminal die Fachinformation, wohin das Warenstück zu legen ist).

Zweckmäßigerweise sind, um große Auftragsvolumina bewältigen zu können, mehrere Sortierstationen vorgesehen. Das Bestücken der Gondeln mit neuen leeren Kartons, wenn die gefüllten entnommen sind, kann durch einen Mitarbeiter erfolgen, der dann für mehrere Sortierstationen tätig ist. Der Vorgang des Neubestückens einer Gondel mit Kartons in Verbindung mit der Entnahme von gefüllten Kartons ist zeitlich nicht so aufwendig wie die Sortierung der Warenstücke in das Fach beziehungsweise den Karton.

Erfolgt die Sortierung lose in die Fächer, wird an der Befüllstation ein Karton von dem Bediener ausgewählt. Die Kartonidentifizierung ist dabei mit der Rechnung verknüpft, so dass Waren aus dem entsprechenden Fach in den richtigen Karton umgefüllt werden können.

Die fertigen Versandkartons werden anschließend verschlossen, mit einem Versandetikett versehen und verladen. Sollte die Versandetikettierung automatisch erfolgen, wird zuvor in der Sortierstation jeder Karton mit einem Identifizierungsetikett versehen. Optional wird jeder Karton nach der Kartonaufrichtung mit einem eindeutigen Barcode gekennzeichnet. Bei der Bestückung des Kartons auf dem Gondelplatz wird der Karton mittels Scanner mit dem Gondelfach verknüpft. Jedes Gondelfach ist ebenfalls mit einem eindeutigen Barcode gekennzeichnet.

Die Erfindung wird im Folgenden anhand von vorteilhaften Ausführungsformen beschrieben. Es zeigen:
- Fig. 1: die Gesamtansicht einer Anlage, in der das erfin- dungsgemäße Verfahren durchgeführt werden kann;
- Fig. 2: eine perspektivische Ansicht einer Sortierstati- on;
- Fig. 3: eine ähnliche Sortierstation in einer Ansicht von oben;
- Fig. 4: eine unbestückte Gondel;
- Fig. 5: eine mit Kartons bestückte Gondel;
- Fig. 6: eine erste Ausführungsform des Verfahrens; und
- Fig. 7: eine zweite Ausführungsform des Verfahrens.

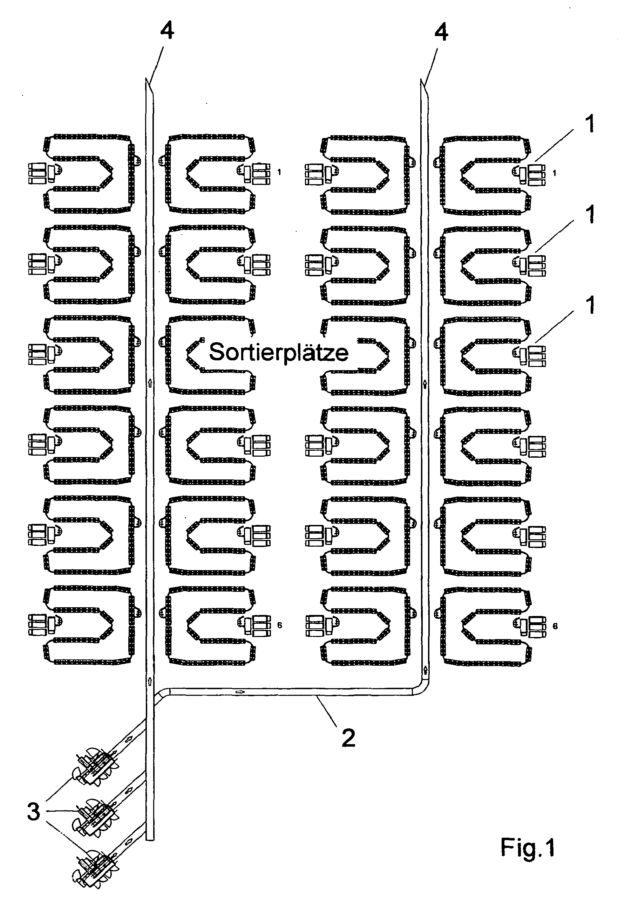

In Figur 1 sind mehrere Sortierstationen 1 gezeigt, die beidseitig von zwei Zweigen einer Fördereinrichtung 2 angeordnet sind. Diese Fördereinrichtung 2, insbesondere ein Förderband, transportiert leere Kartons, die in Aufrichtstationen 3 aufgerichtet oder aufgefaltet werden. Nach Passieren der entsprechenden Sortierstation 1 und Befüllung der Kartons werden diese dann durch die Fördereinrichtungen 2 in Richtung der Pfeile 4 für den Versand abtransportiert.

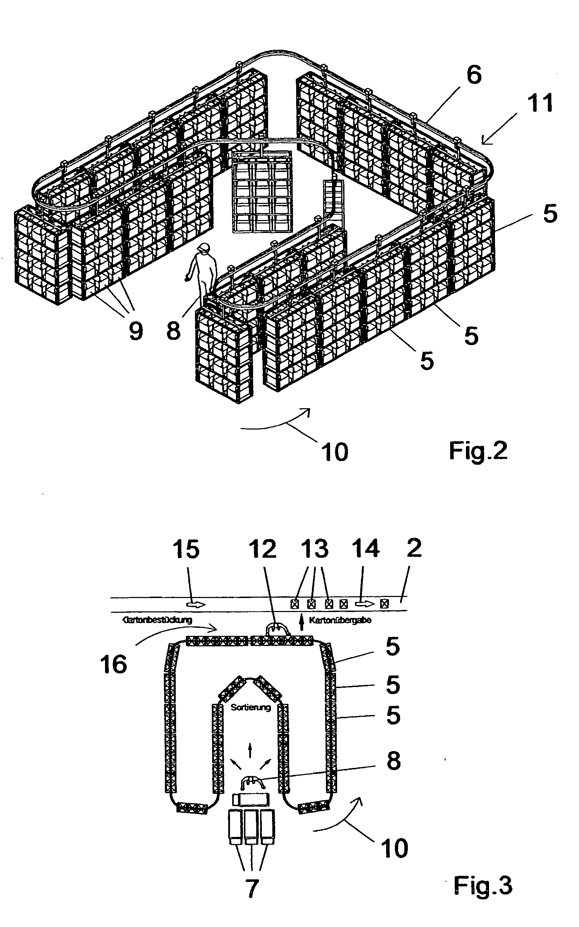

In der in den Figuren 2 und 3 gezeigten Sortierstation sind Gondeln 5 verschiebbar an einem geschlossenen Schienenstrang 6 aufgehängt. Die Anordnung hat dabei die Form eines doppelwandigen U. Nachdem die Waren für mehrere Aufträge mit einer oder mehreren Transporteinheiten 7, zum Beispiel Rollcontainern, Paletten oder Behältern, in die Sortierstation 1 hereingefahren sind, werden die Waren durch die Bedienungsperson 8 in die einzelnen Fächer 9 der Gondeln 5 einsortiert. Dies geschieht im inneren U-förmigen Teil des Schienenstrangs 6. Sind die Gondeln 5 befüllt, werden sie nach rechts außen in Richtung des Pfeils 10 verschoben und gelangen letztendlich in den Bereich 11, wo durch eine weitere Person 12 die gefüllten Kartons 13 auf das Transportband 2 gestellt werden und in Richtung des Pfeils 14 abtransportiert werden. Neue Kartons werden in Richtung des Pfeils 15 auf dem Transportband zugeführt. Nachdem die entsprechende Gondeln 5 geleert sind, können sie gemeinsam als Zug weiter im Gegenuhrzeigersinn verschoben werden und bei 16 mit neuen Kartons befüllt werden.

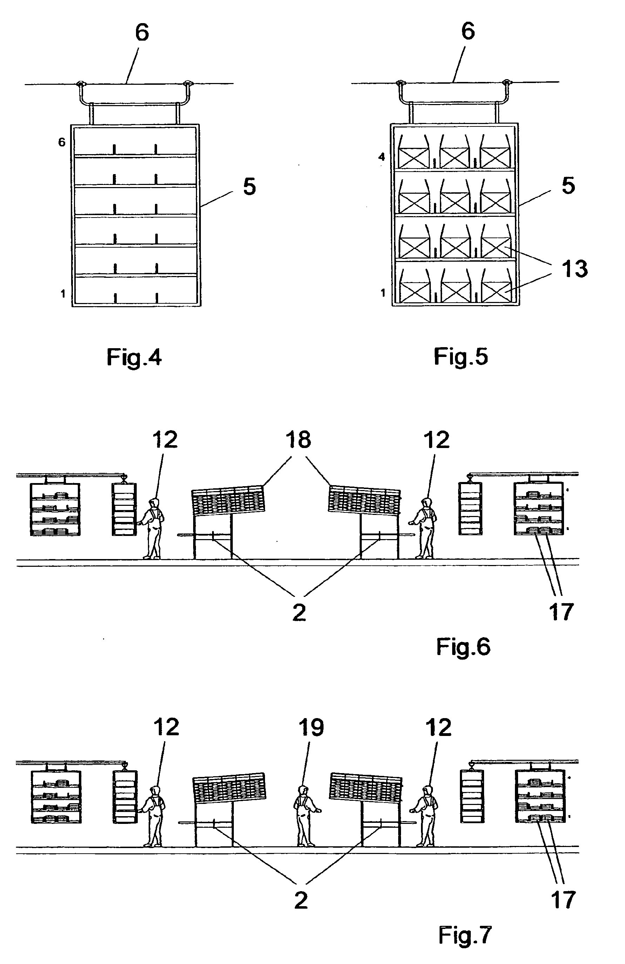

In Figur 4 ist eine leere Gondel 5, in Figur 5 eine Gondel 5 gezeigt, die mit Kartons 13 befüllt ist.

Bei der Ausführungsform der Figuren 2-5 werden Kartons 13 in die Fächer der Gondeln 5 eingesetzt, die dann befüllt werden. Bei den Ausführungsformen der Figuren 6 und 7 werden die Waren 17 lose in die Fächer der Gondeln 5 eingesetzt und durch Bedienungspersonen 12 entnommen und in Kartons eingefüllt. Diese entnehmen die leeren Kartons den Fördereinrichtungen 2 und stellen sie zunächst in einen Puffer 18 ein, um dann jeweils den geeigneten Karton auswählen zu können. Die Fördereinrichtungen 2 sind dabei in einer Ebene angeordnet, beziehungsweise es ist nur eine Fördereinrichtung für leere und gefüllte Kartons vorgesehen.

Die Ausführungsform der Figur 7 unterscheidet sich von derjenigen der Figur 6 dadurch, dass eine zusätzliche Bedienungsperson 19 vorhanden ist, die nur für das Entnehmen der leeren Kartons 13 von der Fördereinrichtung 2 und das Aufstellen gefüllter Kartons 13 auf diese Fördereinrichtung vorgesehen ist, während das Befüllen der Kartons 13 durch die Bedienungspersonen 12 geschieht.

## Patentansprüche

1. Verfahren zum Zusammenstellen und Verpacken von Waren für den Versand, bei dem
- Waren für mehrere Aufträge aus einem Lager entnommen und unsortiert in eine Transporteinheit eingebracht, kommissioniert werden,
- die eingebrachten Waren mit der Transporteinheit zu einer Sortierstation (1) verbracht werden,
- wo sie nach Aufträgen sortiert werden,
- und bei dem sie in Kartons (13), die aufgerichtet zugeführt werden, verpackt abtransportiert werden, **dadurch gekennzeichnet,**
- **dass** die Waren in der Sortierstation (1) nach Aufträgen sortiert in Fächer (9) von entlang einem geschlossenen Schienenstrang (6) verfahrbaren Sammeleinheiten (5) eingebracht werden,
- die nach Beendigung der Befüllung an eine Stelle verschoben werden, so die Waren entnommen werden und in den Kartons (13) verpackt abtransportiert werden.

2. Verfahren nach Anspruch 1, **dadurch gekennzeichnet, dass** als Sammeleinheiten (5) an den Schienen (6) aufgehängte und entlang derselben verschiebbare, die Fächer (9) aufweisende Vorrichtungen (5), wie Gondeln verwendet werden, von denen insbesondere jeweils mehrere zugartig miteinander verbunden sind.

3. Verfahren nach Anspruch 1 oder 2, **dadurch gekennzeichnet, dass** die Waren in der Sortierstation (1) in Kartons (13) eingebracht werden, die vorher in die Fächer (9) der Sammeleinheiten (5) eingestellt worden sind.

4. Verfahren nach Anspruch 3, **dadurch gekennzeichnet, dass** an der Stelle des geschlossenen Schienenstrangs (6), an der die gefüllten Kartons (13) entnommen und auf eine Fördereinrichtung (2) gestellt werden, leere Kartons (13) von einer Fördereinrichtung (2) entnommen und in die Fächer (9) der Sammeleinheiten eingestellt werden.

5. Verfahren nach Anspruch 1 oder 2, **dadurch gekennzeichnet, dass** die Waren lose in die Fächer (9) der Sammeleinrichtungen (5) eingelegt werden und an einer Stelle des Schienenstrangs (6), wo leere Kartons (13) mit einer Fördereinrichtung (2) zugeführt und gefüllte Kartons (13) mit einer Fördereinrichtung (2) abgeführt werden, aus den Fächern (9) entnommen und in zugeführte Kartons (13) eingefüllt werden.

6. Verfahren nach Anspruch 5, **dadurch gekennzeichnet, dass** eine oder mehrere Personen (12) die leeren Kartons (13) von der Fördereinrichtung (2) entnehmen und die gefüllten Kartons (13) auf die Fördereinrichtung (2) stellen und andere Personen (12) die Waren aus den Fächern (9) entnehmen und in die Kartons (13) einfüllen.

7. Verfahren nach Anspruch 5, **dadurch gekennzeichnet, dass** eine oder mehrere Personen (12) die leeren Kartons (13) von der Fördereinrichtung (2) entnehmen und die gefüllten Kartons (13) auf die Fördereinrichtung (2) stellen und dieselben Personen (12) die Waren aus den Fächern (9) entnehmen und in die Kartons (13) einfüllen.

8. Verfahren nach einem der Ansprüche 1 bis 7, **dadurch gekennzeichnet, dass** Pufferspeicher (18) für leere Kartons (13) verwendet werden.

9. Verfahren nach einem der Ansprüche 1 bis 8, **dadurch gekennzeichnet, dass** getrennte Fördereinrichtungen (2) zum Zuführen der leeren und Abführen der gefüllten Kartons (13) verwendet werden.

10. Verfahren nach einem der Ansprüche 1 bis 7, **dadurch gekennzeichnet, dass** dieselbe Fördereinrichtung (2) zum Zuführen der leeren und Abführen der gefüllten Kartons (13) verwendet wird.

11. Verfahren nach einem der Ansprüche 1 bis 10, **dadurch gekennzeichnet, dass** ein Schienenstrang (6) in Form eines "doppelwandigen" U verwendet wird.

12. Verfahren nach einem der Ansprüche 1 bis 11, **dadurch gekennzeichnet, dass** Kartons (13) unterschiedlicher Größen entsprechend der Menge/Größe der Waren der einzelnen Aufträge zugeführt werden.

13. Verfahren nach einem der Ansprüche 1 bis 11, **dadurch gekennzeichnet, dass** Kartons (13) ohne Vorbestimmung der Größen zugeführt werden und, falls erforderlich, die Waren in größere oder kleinere Kartons (13) umgefüllt werden.

14. Verfahren nach einem der Ansprüche 1 bis 13, **dadurch gekennzeichnet, dass** optische und/oder akustische Signale für die Auswahl der Kartons (13) und/oder das Einsortieren in die Fächer (9) der Sammeleinheiten (5) verwendet werden.

15. Verfahren nach einem der Ansprüche 1 bis 14, **dadurch gekennzeichnet, dass** mehrere Sortierstationen (1) verwendet werden.

## Claims

1. A process for preparing and packaging goods for dispatch, in which
- goods for a plurality of orders are removed from a store and commissioned, loaded in unsorted manner into a transport unit,
- the loaded goods are brought by the transport unit to a sorting station (1),
- where they are sorted according to orders,
- and in which they are transported away, packed in boxes (13) which are supplied upright, **characterised in that**
- the goods, which are sorted in the sorting station (1) according to orders, are loaded into compartments (9) of collecting units (5) which may be moved along a closed rail section (6)
- and which, after completion of the filling procedure, are displaced to a point where the goods are removed and transported away, packed in the boxes (13).

2. A process according to Claim 1, **characterised in that** devices (5), such as gondolas, which are suspended on and displaced along the rails (6) and contain the compartments (9), are used as collecting units (5), and a plurality of these devices are, in particular, connected together in each case in the manner of a train.

3. A process according to Claim 1 or 2, **characterised in that** the goods in the sorting station (1) are loaded into boxes (13) which have already been placed in the compartments (9) of the collecting units (5).

4. A process according to Claim 3, **characterised in that**, at the point in the closed rail section (6) at which the filled boxes (13) are removed and placed on a conveyor device (2), empty boxes (13) are removed from a conveyor device (2) and placed in the compartments (9) of the collecting units.

5. A process according to Claim 1 or 2, **characterised in that** the goods are inserted in bulk in the compartments (9) of the collecting devices (5) and, at a point in the rail section (6) where empty boxes (13) are supplied by a conveyor device (2) and filled boxes (13) are conveyed away by a conveyor device (2), are removed from the compartments (9) and packed in supplied boxes (13).

6. A process according to Claim 5, **characterised in that** one or more personnel (12) remove the empty boxes (13) from the conveyor device (2) and place the filled boxes (13) on the conveyor device (2) and other personnel (12) remove the goods from the compartments (9) and pack them in the boxes (13).

7. A process according to Claim 5, **characterised in that** one or more personnel (12) remove the empty boxes (13) from the conveyor device (2) and place the filled boxes (13) on the conveyor device (2) and these same personnel (12) remove the goods from the compartments (9) and pack them in the boxes (13).

8. A process according to one of Claims 1 to 7, **characterised in that** buffer stores (18) are used for empty boxes (13).

9. A process according to one of Claims 1 to 8, **characterised in that** separate conveyor devices (2) are used to supply the empty boxes (13) and convey the filled boxes (13) away.

10. A process according to one of Claims 1 to 7, **characterised in that** the same conveyor device (2) is used to supply the empty boxes (13) and convey the filled boxes (13) away.

11. A process according to one of Claims 1 to 10, **characterised in that** a rail section (6) in the form of a "double-walled" U is used.

12. A process according to one of Claims 1 to 11, **characterised in that** boxes (13) of different sizes are supplied according to the quantity/size of the goods of the individual orders.

13. A process according to one of Claims 1 to 11, **characterised in that** boxes (13) are supplied without predetermining the sizes and, if necessary, the goods are repacked in larger or smaller boxes (13).

14. A process according to one of Claims 1 to 13, **characterised in that** optical and/or acoustic signals are used for selecting the boxes (13) and/or for sorting into the compartments (9) of the collecting units (5).

15. A process according to one of Claims 1 to 14, **characterised in that** a plurality of sorting stations (1) are used.

## Revendications

1. Procédé de composition et de conditionnement d'articles à expédier, dans lequel
- des articles pour plusieurs commandes sont retirés d'un lieu de stockage et introduits, préparés, dans une unité de transport, sans être triés,
- les articles introduits sont amenés avec l'unité de transport à une station de tri (1),
- où ils sont triés par commande,
- et dans lequel ils sont enlevés après avoir été conditionnés dans des cartons (13) fournis en position redressée, **caractérisé en ce que**
- les articles triés par commande sont introduits à la station de tri (1) dans des compartiments (9) d'unités collectrices (5) pouvant se déplacer le long d'un tronçon de rails (6) fermé,
- lesdites unités, une fois chargées, sont déplacées jusqu'à un endroit où les articles sont retirés et enlevés après avoir été conditionnés dans les cartons (13).

2. Procédé selon la revendication 1, **caractérisé en ce que** comme unités collectrices (5), on utilise des dispositifs (5) suspendus aux rails (6), pouvant se déplacer le long de ceux-ci et présentant les compartiments (9), par exemple des nacelles, dont en particulier respectivement plusieurs sont reliées ensemble à la manière d'un train.

3. Procédé selon la revendication 1 ou 2, **caractérisé en ce qu'**à la station de tri (1), les articles sont introduits dans des cartons (13) posés préalablement dans les compartiments (9) des unités collectrices (5).

4. Procédé selon la revendication 3, **caractérisé en ce qu'**à l'endroit du tronçon de rails (6) fermé où les cartons remplis (13) sont retirés et posés sur un dispositif de transport (2), des cartons vides (13) sont retirés d'un dispositif de transport (2) et posés dans les compartiments (9) des unités collectrices.

5. Procédé selon la revendication 1 ou 2, **caractérisé en ce que** les articles sont posés en vrac dans les compartiments (9) des unités collectrices (5) et sont retirés des compartiments (9) à un endroit du tronçon de rails (6) où des cartons vides (13) sont fournis par un dispositif de transport (2) et des cartons pleins (13) sont enlevés par un dispositif de transport (2), et sont introduits dans des cartons (13) fournis.

6. Procédé selon la revendication 5, **caractérisé en ce qu'**une ou plusieurs personnes (12) retire(nt) les cartons vides (13) du dispositif de transport (2) et posent les cartons pleins (13) sur le dispositif de transport (2) et d'autres personnes (12) retirent les articles des compartiments (9) et les insèrent dans les cartons (13).

7. Procédé selon la revendication 5, **caractérisé en ce qu'**une ou plusieurs personnes (12) retire(nt) les cartons vides (13) du dispositif de transport (2) et posent les cartons pleins (13) sur le dispositif de transport (2) et les mêmes personnes (12) retirent les articles des compartiments (9) et les insèrent dans les cartons (13).

8. Procédé selon l'une quelconque des revendications 1 à 7, **caractérisé en ce que** des lieux de stockage tampon (18) sont utilisés pour des cartons vides (13).

9. Procédé selon l'une quelconque des revendications 1 à 8, **caractérisé en ce que** des dispositifs de transport (2) séparés sont utilisés pour fournir les cartons (13) vides et enlever les cartons pleins.

10. Procédé selon l'une quelconque des revendications 1 à 7, **caractérisé en ce que** le même dispositif de transport (2) est utilisé pour fournir les cartons vides (13) et enlever les cartons pleins.

11. Procédé selon l'une quelconque des revendications 1 à 10, **caractérisé en ce qu'**un tronçon de rails (6) en forme de U "double paroi" est utilisé.

12. Procédé selon l'une quelconque des revendications 1 à 11, **caractérisé en ce que** des cartons (13) de différentes tailles sont fournis selon la quantité/taille des articles des différentes commandes.

13. Procédé selon l'une quelconque des revendications 1 à 11, **caractérisé en ce que** des cartons (13) sont fournis sans prédéterminer la taille, et si nécessaire, les articles sont transférés dans des cartons (13) plus grands ou plus petits.

14. Procédé selon l'une quelconque des revendications 1 à 13, **caractérisé en ce que** des signaux optiques et/ou acoustiques sont utilisés pour sélectionner les cartons (13) et/ou garnir les compartiments (9) des unités collectrices (5).

15. Procédé selon l'une quelconque des revendications 1 à 14, **caractérisé en ce que** plusieurs stations de tri (1) sont utilisées.
